# EUROPEAN PATENT SPECIFICATION

(11) **EP 2 900 764 B1**
(45) Date of publication and mention of the grant of the patent: **19.07.2017**
(21) Application number: 13766455.3
(22) Date of filing: 16.09.2013
(51) Int. Cl.: C09D 1/00

(54) **COATABLE COMPOSITION, SOIL-RESISTANT COMPOSITION, SOIL-RESISTANT ARTICLES, AND METHODS OF MAKING THE SAME**
ÜBERZIEHBARE ZUSAMMENSETZUNG, SCHMUTZABWEISENDE ZUSAMMENSETZUNG, SCHMUTZABWEISENDE ARTIKEL UND VERFAHREN ZUR HERSTELLUNG DAVON
COMPOSITION DE REVÊTEMENT, COMPOSITION RÉSISTANT AUX SALISSURES, ARTICLES RÉSISTANT AUX SALISSURES ET PROCÉDÉS POUR LES PRÉPARER

(30) Priority: 26.09.2012 US 201261705902 P
(43) Date of publication of application: 05.08.2015
(73) Proprietor: 3M Innovative Properties Company, St. Paul, MN 55133-3427 (US)
(72) Inventor: JING, Naiyong, Saint Paul, Minnesota 55133-3427 (US); STRERATH, Christiane, 41453 Neuss (DE); SUN, Fuxia, Saint Paul, Minnesota 55133-3427 (US); RIDDLE, Justin A., Saint Paul, Minnesota 55133-3427 (US); JIANG, Xuan, Saint Paul, Minnesota 55133-3427 (US); CHEN, Xue-hua, Shanghai 200336 (CN)
(74) Representative: Herzog, Fiesser & Partner Patentanwälte PartG mbB
(86) International application number: PCT/US2013/059930
(87) International publication number: WO 2014/052072

(56) References cited:
- WO-A2-2004/045494
- WO-A2-2005/013337
- WO-A2-2011/084661

## Description

### TECHNICAL FIELD

The present disclosure relates broadly to articles with soil-resistant properties, compositions that form soil-resistant coatings, and methods for making the same.

### BACKGROUND

The problem of soiling of various articles is ubiquitous. As used herein, the term "soiling" refers to discoloration or accumulation of material caused by contact of a substrate with foreign material. Examples of soiling include staining, dirt accumulation, and lime-scale build up. Soiling commonly detract from aesthetic value of various articles; for example, in the case of architectural surfaces and advertising media. In some cases, soiling affects important functional properties as well such as, for example, in the case of road signage where visibility may be impaired and in the case of lime-scale build up on the inner surfaces of pipes and tubing that restrict fluid flow. Dirt accumulation on traffic signs can reduce their legibility and retroreflectivity.

WO 2005/013337 A2 is directed to the generation of nanoparticles from bulk solids such as metal, semiconductor or ceramic bulk solids.

WO 2004/045494 A2 relates to the improvements of blood clotting by using thrombin-conjugated nanoparticles.

WO 2011/084661 A2 is directed to sulfonate-functional coatings which may be provided on a primer coating containing silica nanoparticles.

### SUMMARY

Advantageously, the present disclosure provides compositions and methods of making soil-resistant coatings that can be incorporated into various articles, thereby making them less prone to soiling, and if soiled, more easily cleaned by natural forces (e.g., wind and/or rain) and/or by other methods (e.g., by manual or mechanical scrubbing or abrading).

In one aspect, the present disclosure provides a method of making a coatable composition, the method comprising sequentially:
a) providing a initial composition comprising silica nanoparticles dispersed in an aqueous liquid medium, wherein the silica nanoparticles have a particle size distribution with an average particle size of less than or equal to 100 nanometers, and wherein the silica sol has a pH greater than 6;
b) acidifying the initial composition to a pH of less than or equal to 4 using inorganic acid to provide a acidified composition; and
c) dissolving at least one metal compound in the acidified composition to provide a coatable composition, wherein the at least one metal compound comprises at least one metal in any of groups 2 through 15 of the Periodic Table of the Elements.

Accordingly, in yet another aspect, the present disclosure provides a method of making a soil-resistant article, the method comprising the sequential steps:
a) providing a initial composition comprising silica nanoparticles dispersed in an aqueous liquid medium, wherein the silica nanoparticles have a particle size distribution with an average particle size of less than or equal to 100 nanometers, and wherein the silica sol has a pH greater than 6;
b) acidifying the initial composition to a pH of less than or equal to 4 using inorganic acid to provide a acidified composition;
c) dissolving at least one metal compound in the acidified composition to provide a coatable composition, wherein the at least one metal compound comprises at least one metal in any of groups 2 through 15 of the Periodic Table of the Elements;
d) contacting the coatable composition with a surface of a substrate; and
e) at least partially drying the coatable composition to provide a soil-resistant layer.

In yet another aspect, the present disclosure provides a soil-resistant article made according to the foregoing method of the present disclosure.

In yet another aspect, the present disclosure provides a soil-resistant composition comprising an amorphous silica matrix containing metal cations, wherein the silica matrix comprises interconnected silica nanoparticles having a particle size distribution with an average particle size of less than or equal to 100 nanometers, wherein the metal cations are selected from the group consisting of iron cationa, calcium cations magnesium cations, zirconium cations and combinations thereof, wherein a majority of the metal cations are individually disposed in the silica matrix, and wherein the metal cations comprise from 0.2 to 20 mole percent of the total combined moles of silicon and the metal cations.

In yet another aspect, the present disclosure provides a soil-resistant article comprising a layer of an amorphous soil-resistant composition disposed on a surface of a substrate, wherein the amorphous soil-resistant composition comprises a silica matrix containing metal cations, wherein the silica matrix comprises interconnected silica nanoparticles having a particle size distribution with an average particle size of less than or equal to 100 nanometers, wherein the metal cations are selected from the group consisting of iron cationa, calcium cations magnesium cations, zirconium cations and combinations thereof, wherein a majority of the metal cations are individually disposed in the silica matrix, and wherein the metal cations comprise from 0.2 to 20 mole percent of the total combined moles of silicon and the metal cations.

Silica matrixes referred to herein may be amorphous or partially amorphous.

As used herein:
the term "dispersion of silica nanoparticles" refers to a dispersion wherein individual silica nanoparticles are dispersed, and does not refer to a dispersion of fumed silica, which has sintered primary silica particles aggregated into chains;
the term "essentially free of " means containing less than one by percent by weight of, typically less than 0.1 percent by weight of, and more typically less than 0.01 percent by weight of;
the term "essentially free of non-volatile organic compounds" means containing less than one percent by weight of organic compounds having a boiling point above 150° Celsius at 1 atmosphere (100 kPa) of pressure;
the term "individually disposed in the silica matrix" in reference to metal cations means that the metal cations are bound through oxygen to silicon, and are not present as a discrete metal phase;
the term "metal compound" means a compound containing at least one metal;
the term "nanoparticle" refers to a particle having a particle size of from 1 to 200 nanometers;
the term "organic compound" refers to any compound containing at least one carbon-carbon and/or carbon-hydrogen bond;
the term "silica", used in reference to silica nanoparticles and silica sols, refers to a compound represented by the formula SiO₂·nH₂O, wherein n is a number greater than or equal to zero; and
the term "soil-resistant" means resistant to discoloration and/or accumulation of material caused by contact with foreign material.

Features and advantages of the present disclosure will be further understood upon consideration of the detailed description as well as the appended claims.

### BRIEF DESCRIPTION OF THE DRAWINGS

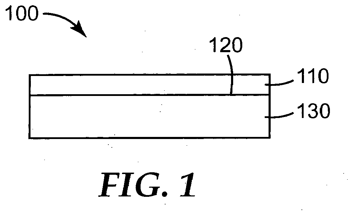

FIG. 1 is a schematic side view of an exemplary soil-resistant article 100 according to the present disclosure.

It should be understood that numerous other modifications and embodiments can be devised by those skilled in the art, which fall within the scope and spirit of the principles of the disclosure. The figure may not be drawn to scale.

### DETAILED DESCRIPTION

The initial composition comprises silica nanoparticles dispersed in an aqueous liquid medium, wherein the silica nanoparticles have a particle size distribution with an average particle size of less than or equal to 100 nanometers, and wherein the initial composition has a pH greater than 6.

The silica nanoparticles have an average particle size of less than or equal to 100 nanometers (nm). In some embodiments, the silica nanoparticles have an average particle size of less than or equal to 75 nm, less than or equal to 50 nm, less than or equal to 30 nm, less than or equal to 25 nm, less than or equal to 20 nm, less than or equal to 15 nm, or even less than 10 nm. Typically, the silica nanoparticles have an average particle size of at least 4 nm, although this is not a requirement. The average primary particle size may be determined, for example, using transmission electron microscopy. As used herein, the term "particle size" refers to the longest dimension of a particle, which is the diameter for a spherical particle.

Of course, silica particles with a particle size greater than 200 nm (e.g., up to 2 micrometers in particle size) may also be included, but typically in a minor amount.

The silica nanoparticles desirably have narrow particle size distributions; for example, a polydispersity of 2.0 or less, or even 1.5 or less. In some embodiments, the silica nanoparticles have a surface area greater than 150 square meters per gram (m²/g), greater than 200 m²/g, or even greater than 400 m²_{/}g.

In some embodiments, the amount of the silica nanoparticles having an average particle size (e.g., diameter) of 40 nm or less is at least 0.1 percent by weight, and desirably at least 0.2 percent by weight, based on the total weight of the initial composition and/or coatable composition. In some embodiments, the concentration of the silica nanoparticles having a particle size (e.g., diameter) of 40 nm or less is no greater than 20 percent by weight, or even no greater than 15 percent by weight, based on the total weight of the initial composition.

The silica nanoparticles may have a polymodal particle size distribution. For example, a polymodal particle size distribution may have a first mode with a particles size in the range of from 5 to 2000 nanometers, preferably 20 to 150 nanometers, and a second mode having a second particle size in the range of from 1 to 45 nanometers, preferably 2 to 25 nanometers.

Nanoparticles (e.g., silica nanoparticles) included in the initial composition can be spherical or non-spherical with any desired aspect ratio. Aspect ratio refers to the ratio of the average longest dimension of the nanoparticles to their average shortest dimension. The aspect ratio of non-spherical nanoparticles is often at least 2:1, at least 3:1, at least 5:1, or at least 10:1. Non-spherical nanoparticles may, for example, have the shape of rods, ellipsoids, and/or needles. The shape of the nanoparticles can be regular or irregular. The porosity of coatings can typically be varied by changing the amount of regular and irregular-shaped nanoparticles in the coatable composition and/or by changing the amount of spherical and non-spherical nanoparticles in the coatable composition.

In some embodiments, the total weight of the silica nanoparticles in the initial composition is at least 0.1 percent by weight, typically at least 1 percent by weight, and more typically at least 2 percent by weight. In some embodiments, the total weight of the silica nanoparticles in the composition is no greater than 40 percent by weight, desirably no greater than 10 percent by weight, and more typically no greater than 7 percent by weight.

Silica sols, which are stable dispersions of silica nanoparticles in aqueous liquid media, are well-known in the art and available commercially. Non-aqueous silica sols (also called silica organosols) may also be used and are silica sol dispersions wherein the liquid phase is an organic solvent, or an aqueous mixture containing an organic solvent. In the practice of this disclosure, the silica sol is chosen so that its liquid phase is compatible with the dispersion, and is typically an aqueous solvent, optionally including an organic solvent. Typically, the initial composition does not include, is essentially free of, fumed silica, although this is not a requirement.

Silica nanoparticle dispersions (e.g., silica sols) in water or water-alcohol solutions are available commercially, for example, under such trade names as LUDOX (marketed by E. I. du Pont de Nemours and Co., Wilmington, Delaware), NYACOL (marketed by Nyacol Co., Ashland, Massachusetts), and NALCO (manufactured by Ondea Nalco Chemical Co., Oak Brook, Illinois). One useful silica sol is NALCO 2326, which is available as a silica sol with an average particle size of 5 nanometers, pH = 10.5, and solid content 15 percent solids by weight. Other commercially available silica nanoparticles include those available under the trade designations NALCO 1115 (spherical, average particle size of 4 nm, 15 percent solids by weight dispersion, pH = 10.4), NALCO 1130 spherical dispersion, average particle size of 8 nm, 30 percent solids by weight dispersion, pH = 10.2), NALCO 1050 (spherical, average particle size 20 nm, 50 percent solids by weight dispersion, pH = 9.0), NALCO 2327 (spherical, average particle size of 20 nm, 40 percent solids by weight dispersion, pH = 9.3), NALCO 1030 (spherical, average particle size of 13 nm, 30 percent solids by weight dispersion, pH = 10.2), NALCO 2329 (spherical, 75 nm, 40 percent solids by weight dispersion, pH = 8.4), and DVSZN004 (spherical, 45 nm, 42 percent by weight dispersion), NALCO TX11561 (45 nm, sodium stabilized, 41 weight percent in water) available from Nalco Chemical Co.

Acicular silica nanoparticles may also be used provided that the average silica nanoparticle size constraints described hereinabove are achieved.

Useful acicular silica nanoparticles may be obtained as an aqueous suspension under the trade name SNOWTEX-UP by Nissan Chemical Industries (Tokyo, Japan). The mixture consists of 20-21 % (w/w) of acicular silica, less than 0.35% (w/w) of Na₂O, and water. The particles are about 9 to 15 nanometers in diameter and have lengths of 40 to 200 nanometers. The suspension has a viscosity of < 100 mPa at 25°C, a pH of about 9 to 10.5, and a specific gravity of about 1.13 at 20°C.

Other useful acicular silica nanoparticles may be obtained as an aqueous suspension under the trade name SNOWTEX-PS-S and SNOWTEX-PS-M by Nissan Chemical Industries, having a morphology of a string of pearls. The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 nm by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

Low- and non-aqueous silica sols (also called silica organosols) may also be used and are silica sol dispersions wherein the liquid phase is an organic solvent, or an aqueous organic solvent. In the practice of the present disclosure, the silica nanoparticle sol is chosen so that its liquid phase is compatible with the intended coating composition, and is typically aqueous or a low-aqueous organic solvent.

Silica sols having a pH of at least 8 can also be prepared according to the methods described in U.S. Patent No. 5,964,693 (Brekau et al.).

Optionally, the initial composition can further include other nanoparticles, including, for example, nanoparticles comprising aluminum oxide, titanium oxide, tin oxide, antimony oxide, antimony-doped tin oxide, indium oxide, tin-doped indium oxide, or zinc oxide.

The initial composition has a pH greater than 6, more typically greater than 7, more typically greater than 8, and even more typically greater than 9.

In some embodiments, the initial composition is essentially free of non-volatile organic compounds. In some embodiments, the initial composition is essentially free of organic surfactants.

The aqueous liquid medium of the initial composition may comprise (in addition to water) at least one volatile organic solvent. Examples of suitable volatile organic solvents include those volatile organic solvents that are miscible with water such as, e.g., methanol, ethanol, isopropanol, and combinations thereof. However, for many applications, reduction or elimination of volatile organic compounds will be desirable, and advantageously the present disclosure may be practiced using initial compositions and/or coatable compositions that are essentially free of volatile organic solvent.

The initial composition is acidified by addition of inorganic acid until it has a pH of less than or equal to 4, typically less than 3, or even less than 2 thereby providing the coatable composition. Useful inorganic acids (i.e., mineral acids) include, for example, hydrochloric acid, nitric acid, sulfuric acid, phosphoric acid, perchloric acid, chloric acid, and combinations thereof. Typically, the inorganic acid is selected such that it has a pKₐ of less than or equal to two, less than one, or even less than zero, although this is not a requirement. Without wishing to be bound by theory, the present inventors believe that some agglomeration of the silica nanoparticles occurs as the pH falls, resulting in a dispersion comprising slightly agglomerated nanoparticles.

At this stage, at least one metal compound is combined with (e.g., dissolved in) the acidified composition thereby providing the coatable composition, generally with mixing. Combination of the various ingredients in the above compositions may be carried out using any suitable mixing technique. Examples include stirring, shaking, and otherwise agitating the composition during or after addition of all components of the composition.

The metal compound (and any metal cations contained therein) may comprise a metal (or metal cation) in any of groups 2 through 15 (e.g., group 2, group 3, group 4, group 5, group 6, group 7, group 8, group 9, group 10, group 11, group 12, group 13, group 14, group 15, and combinations thereof) of the Periodic Table of the Elements.

Metal cations contained in the metal compound(s) may have a charge of n+, wherein n represents an integer ≥ 2 (e.g., 2, 3, 4, 5, or 6), for example. The metal compounds should have sufficient solubility in water to achieve the desired level of metal incorporation in the resultant soil-resistant composition. For example, the metal compound(s) may comprise metal salt(s). Examples of useful metal compounds include copper compounds (e.g., Cu(NO₃)₂·3H₂O), platinum compounds (e.g., H₂PtCl₆), aluminum compounds (e.g., Al(NO₃)₃), zirconium compounds(e.g., ZrCl₄ or ZrOCl₂·8 H₂O), calcium compounds (e.g., CaCl₂), magnesium compounds (e.g., MgCl₂), titanium compounds (e.g., TiOSO₄·2H₂O), zinc compounds (e.g. Zn(NO₃)₂·6H₂O, and ZnCl₂), iron compounds (e.g., FeCl₃), tin compounds (e.g., SnCl₂ and SnCl₄·5H₂O), and combinations thereof.

Coatable compositions according to the present disclosure may further comprise one or more optional additives such as, for example, colorant(s), surfactant(s), thickener(s), thixotrope(s), or leveling aid(s).

In some embodiments, the coatable composition may comprise an added surfactant, however, the inventors have unexpected discovered that coatable compositions according to the present disclosure wet out at least some hydrophobic surfaces without added surfactant.

The solids in the coatable composition may comprise from 30 to 99 percent by weight of silica, desirably from 60 to 97.5 percent by weight of silica, more desirably from 80 to 95 percent by weight of silica, although other amounts may also be used.

Similarly, the coatable composition may comprise the metal cations in an amount of from 0.2 to 20 mole percent (desirably from 0.5 to 10 mole percent, more desirably from 2 to 5 mole percent) of the total combined moles of silicon and the metal cations (e.g., having a positive charge of at least 2) contained in the metal compound(s), although other amounts may also be used.

Once made, the coating composition is typically stable over long periods of time, over a range of temperatures, although this is not a requirement. The coating composition may be coated onto a substrate and at least partially dried, typically substantially completely dried.

Without wishing to be bound by theory, the present inventors believe that during the drying process, condensation processes lead to chemical bonding between the silica nanoparticles and/or agglomerates at points of contact to form a silica matrix. Metal cations may be individually incorporated into the silica matrix, resulting in an amorphous composition.

The coatable composition can be contacted with a surface of a substrate and at least partially dried to form a soil-resistant coated article. Unexpectedly, the present inventors have discovered that coatable compositions according to the present disclosure can be contacted with a surface of a substrate and at least partially dried to provide a defect-free layer with unexpected soil-resistant properties, even without added metal cations. Suitable methods of drying the coatable composition include, for example, evaporation in air at about room temperature, ovens, heated air blowers, infrared heaters, and hot cans. Drying is typically carried out until the coatable composition is substantially completely dry, although this is not a requirement. Once contacted with the substrate and at least partially dried, the soil-resistant layer may be aged for a period of time such as for example, at least 1 hour (hr), at least 4 hrs, at least 8 hrs, at least 24 hrs, at least 72 hrs, at least 1 week, or even at least 2 weeks, during which time the soil-resistance of the soil-resistant layer may improve.

Referring now to FIG. 1, soil-resistant article 100 comprises soil-resistant layer 110 disposed on surface 120 of substrate 130. Examples of suitable methods of contact the coatable composition with the surface of the substrate include roll coating, spray coating, gravure coating, dip coating, and curtain coating. Typically, the soil-resistant layer has a thickness in the range of from 0.02 to 100 microns, desirably 0.05 to 5 microns, although this is not a requirement.

Typically, soil-resistant layers according to the present disclosure are at least substantially transparent; however, this is not a requirement.

Examples of suitable substrates include virtually any dimensionally-stable material. Examples include glass substrates (e.g., mirrors, windows, windshields, tables, lenses, and prisms), metal substrates, ceramic substrates, organic polymer substrates (e.g., molded polymer articles, automotive paints and clearcoats, polymer films, retroreflective sheeting, indoor signage, and outdoor signage), and fabric (e.g., upholstery fabric). In some embodiments, the substrate comprises at least one of glass or an organic polymer. In some embodiments, the organic polymer comprises at least one of a polyester (e.g., polyethylene terephthalate or polybutylene terephthalate), polycarbonate, allyldiglycol carbonate, acrylics (e.g., polymethyl methacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), and cellulose esters (e.g., cellulose acetate and cellulose butyrate), and combinations thereof.

Substrates that may benefit from hard/water/lime scale resistant coatings according to the present disclosure include windows, mirrors, lavatory appliances (toilet, basin, shower cabin, shower head, tub), taps, sink, kettles, tiles, cooling towers and heat exchangers, evaporative coolers, industrial cooling systems, sea water cooling system, swimming pools, fountains, ornamental ponds, hot tubs and whirlpool spas, automotive radiators, hot water heating systems, immersion heaters, distillation and reverse osmosis water purification systems, boilers, water and oil well reclamation, pipes, plumbing, washing machine, dishwasher, steam ovens, and steam boilers.

### SELECT EMBODIMENTS OF THE PRESENT DISCLOSURE

In a first embodiment, the present disclosure provides a method of making a coatable composition, the method comprising sequentially:
a) providing a initial composition comprising silica nanoparticles dispersed in an aqueous liquid medium, wherein the silica nanoparticles have a particle size distribution with an average particle size of less than or equal to 100 nanometers, and wherein the silica sol has a pH greater than 6;
b) acidifying the initial composition to a pH of less than or equal to 4 using inorganic acid to provide a acidified composition; and
c) dissolving at least one metal compound in the acidified composition to provide a coatable composition, wherein the at least one metal compound comprises at least one metal in any of groups 2 through 15 of the Periodic Table of the Elements.

In a second embodiment, the present disclosure provides a method according to the first embodiment, wherein the at least one metal compound comprises at least one metal cation having a charge of at least +2.

In a third embodiment, the present disclosure provides a method according to the first or second embodiment, wherein said at least one metal compound is selected from the group consisting of tin compounds, copper compounds, iron compounds, platinum compounds, calcium compounds, magnesium compounds, zinc compounds, zirconium compounds, titanium compounds, antimony compounds, and combinations thereof.

In a fourth embodiment, the present disclosure provides a method according to any one of the first to third embodiments, wherein said at least one metal compound comprises at least one metal cation, and wherein the metal cation comprises from 0.2 to 20 mole percent of the total combined moles of silicon and the at least one metal cation.

In a fifth embodiment, the present disclosure provides a method according to any one of the first to fourth embodiments, wherein the coatable composition is essentially free of organic non-volatile compounds.

In a seventh embodiment, the present disclosure provides a method of making a soil-resistant article, the method comprising the sequential steps:
a) providing a initial composition comprising silica nanoparticles dispersed in an aqueous liquid medium, wherein the silica nanoparticles have a particle size distribution with an average particle size of less than or equal to 100 nanometers, and wherein the silica sol has a pH greater than 6;
b) acidifying the initial composition to a pH of less than or equal to 4 using inorganic acid to provide a acidified composition;
c) dissolving at least one metal compound in the acidified composition to provide a coatable composition, wherein the at least one metal compound comprises at least one metal in any of groups 2 through 15 of the Periodic Table of the Elements;
d) contacting the coatable composition with a surface of a substrate; and
e) at least partially drying the coatable composition to provide a soil-resistant layer.

In an eighth embodiment, the present disclosure provides a method according to the seventh embodiment, wherein the at least one metal compound comprises at least one metal cation having a charge of at least +2.

In a ninth embodiment, the present disclosure provides a method according to the seventh or eighth embodiment, wherein said at least one metal compound is selected from the group consisting of tin compounds, copper compounds, iron compounds, platinum compounds, calcium compounds, magnesium compounds, zinc compounds, zirconium compounds, titanium compounds, antimony compounds, and combinations thereof.

In a tenth embodiment, the present disclosure provides a method according to any one of the seventh to ninth embodiments, wherein said at least one metal compound comprises at least one metal cation, and wherein the metal cation comprises from 0.2 to 20 mole percent of the total combined moles of silicon and the at least one metal cation.

In an eleventh embodiment, the present disclosure provides a method according to any one of the seventh to tenth embodiments, wherein the silica nanoparticles have an average particle size of less than or equal to 45 nanometers.

In a twelfth embodiment, the present disclosure provides a method according to any one of the seventh to tenth embodiments, wherein the silica nanoparticles have an average particle size of less than or equal to 25 nanometers.

In a thirteenth embodiment, the present disclosure provides a method according to any one of the seventh to twelfth embodiments, wherein the substrate comprises glass or an organic polymer.

In a fourteenth embodiment, the present disclosure provides a method according to any one of the seventh to thirteenth embodiments, wherein the organic polymer comprises at least one of polymethyl methacrylate or polyethylene terephthalate.

In a fifteenth embodiment, the present disclosure provides a method according to any one of the seventh to fourteenth embodiments, wherein the soil-resistant layer is optically clear.

In a sixteenth embodiment, the present disclosure provides a method according to any one of the seventh to fifteenth embodiments, wherein the soil-resistant layer has a thickness in a range of from 0.02 to 100 microns.

In a seventeenth embodiment, the present disclosure provides a method according to any one of the seventh to sixteenth embodiments, wherein the inorganic acid has a pKₐ of less than or equal to zero.

In an eighteenth embodiment, the present disclosure provides a method according to any one of the seventh to seventeenth embodiments, wherein step b) comprises acidifying the initial composition to a pH of less than or equal to 2.

In a nineteenth embodiment, the present disclosure provides a method according to any one of the seventh to eighteenth embodiments, wherein the coatable composition is essentially free of organic non-volatile compounds.

In a twenty-second embodiment, the present disclosure provides a soil-resistant composition comprising an amorphous silica matrix containing metal cations, wherein the silica matrix comprises interconnected silica nanoparticles having a particle size distribution with an average particle size of less than or equal to 100 nanometers, wherein the metal cations are selected from the group consisting of iron cationa, calcium cations magnesium cations, zirconium cations and combinations thereof, wherein a majority of the metal cations are individually disposed in the silica matrix, and wherein the metal cations comprise from 0.2 to 20 mole percent of the total combined moles of silicon and the metal cations. >

In a twenty-third embodiment, the present disclosure provides a soil-resistant composition according to the twenty-second embodiment, wherein the metal cations have a charge of n+, wherein n represents an integer ≥ 2.

In a twenty-fourth embodiment, the present disclosure provides a soil-resistant composition according to the twenty-second or twenty-third embodiment, wherein said at least one metal compound is selected from the group consisting of tin cations, copper cations, iron cations, platinum cations, calcium cations, magnesium cations, zinc cations, zirconium cations, titanium cations, antimony compounds, and combinations thereof.

In a twenty-fifth embodiment, the present disclosure provides a soil-resistant composition according to any one of the twenty-second to twenty-fourth embodiments, wherein the silica nanoparticles have an average particle size of less than or equal to 45 nanometers.

In a twenty-sixth embodiment, the present disclosure provides a soil-resistant composition according to any one of the twenty-second to twenty-fifth embodiments, wherein the silica nanoparticles have an average particle size of less than or equal to 25 nanometers.

In a twenty-seventh embodiment, the present disclosure provides a soil-resistant composition according to any one of the twenty-second to twenty-sixth embodiments, wherein the soil-resistant composition is essentially free of organic non-volatile compounds.

In a twenty-eighth embodiment, the present disclosure provides a soil-resistant article comprising a layer of an amorphous soil-resistant composition disposed on a surface of a substrate, wherein the amorphous soil-resistant composition comprises a silica matrix containing metal cations, wherein the silica matrix comprises interconnected silica nanoparticles having a particle size distribution with an average particle size of less than or equal to 100 nanometers, wherein the metal cations are selected from the group consisting of iron cationa, calcium cations, magnesium cations, zirconium cations and combinations thereof, wherein a majority of the metal cations are individually disposed in the silica matrix, and wherein the metal cations comprise from 0.2 to 20 mole percent of the total combined moles of silicon and the metal cations.

In a twenty-ninth embodiment, the present disclosure provides a soil-resistant article according to the twenty-eighth embodiment, wherein the metal cations have a charge of n+, wherein n represents an integer ≥ 2.

In a thirtieth embodiment, the present disclosure provides a soil-resistant article according to the twenty-eighth or twenty ninth embodiment, wherein said at least one metal compound is selected from the group consisting of tin cations, copper cations, iron cations, platinum cations, calcium cations, magnesium cations, zinc cations, zirconium cations, titanium cations, antimony compounds, and combinations thereof.

In a thirty-first embodiment, the present disclosure provides a soil-resistant article according to any one of the twenty-eighth to thirtieth embodiments, wherein the silica nanoparticles have an average particle size of less than or equal to 45 nanometers.

In a thirty-second embodiment, the present disclosure provides a soil-resistant article according to any one of the twenty-eighth to thirty-first embodiments, wherein the silica nanoparticles have an average particle size of less than or equal to 25 nanometers.

In a thirty-third embodiment, the present disclosure provides a soil-resistant article according to any one of the twenty-eighth to thirty-second embodiments, wherein the substrate comprises glass or an organic polymer.

In a thirty-fourth embodiment, the present disclosure provides a soil-resistant article according to any one of the twenty-eighth to thirty-third embodiments, wherein the organic polymer comprises at least one of polymethyl methacrylate or polyethylene terephthalate.

In a thirty-fifth embodiment, the present disclosure provides a soil-resistant article according to any one of the twenty-eighth to thirty-fourth embodiments, wherein the soil-resistant layer is optically clear.

In a thirty-sixth embodiment, the present disclosure provides a soil-resistant article according to any one of the twenty-eighth to thirty-fifth embodiments, wherein the soil-resistant layer has a thickness in a range of from 0.02 to 100 microns.

In a thirty-seventh embodiment, the present disclosure provides a soil-resistant article according to any one of the twenty-eighth to thirty-fifth embodiments, wherein the coatable composition is essentially free of organic non-volatile compounds.

In a thirty-eighth embodiment, the present disclosure provides a soil-resistant article according to any one of the twenty-eighth to thirty-seventh embodiments, wherein the substrate comprises retroreflective sheeting.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples are by weight. In the tables, "NM" means "not measured".

The following examples are divided into two sections. A first section concerning resistance to carpet-soil and a second part concerning resistance to lime scale build up.

### MATERIALS

Colloidal silica dispersions NALCO 1115 (4 nm, sodium stabilized, 10 weight percent in water), NALCO 1050 (20 nm, sodium stabilized, 10 weight percent in water), NALCO DVSZN004 (42 nm, 41 weight percent in water), NALCO TX11561 (45 nm, sodium stabilized, 41 weight percent in water) and NALCO 2329 (75 nm) were obtained from the Nalco Company, Naperville, Illinois, under the respective trade designations NALCO 1115, NALCO 1050, NALCO DVSZN004, NALCO TX11561, and NALCO 2329 colloidal silica.

LEVASIL 500/15 silica sol (6 nm, sodium stabilized, 5 weight percent in water) is available as LEVASIL 500/15 Akzo-Nobel, Amsterdam, The Netherlands.

Zn(NO₃)₂·6H₂O was obtained from Mallinckrodt Baker, Inc., Phillipsburg, New Jersey.

Cu(NO₃)₂·3H₂O was obtained from Morton Thiokol Inc., Danvers, Massachusetts.

H₂PtCl₆·6H₂O was obtained from Sigma-Aldrich Co., Saint Louis, Missouri.

FeCl₃·6H₂O was obtained from Sigma-Aldrich Co.

SnCl₄·5H₂O was obtained from Sigma-Aldrich Co.

TiOSO₄·2H₂O was obtained from Alfa Aesar, Ward Hill, Massachusetts.

ZrOCl₂·8H₂O was obtained from Sigma-Aldrich Co.

CaCl₂·6H₂O was obtained from Sigma-Aldrich Co.

MgCl₂·6H₂O was obtained from Sigma-Aldrich Co.

ZnCl₂ was obtained from Sigma-Aldrich Co.

NaHCO₃ was obtained from Sigma-Aldrich Co.

Polyethylene terephthalate (PET) film (50 micrometer thick) was obtained from E.I. DuPont de Nemours, Wilmington, Delaware under the trade designation MELINEX 618.

Poly(methyl methacrylate) (PMMA) film was obtained from 3M Company, St. Paul, MN under the trade designation SCOTCHPAK Heat Sealable Polyester Film.

Regular glass slides were obtained from VWR international, West Chester, Pennsylvania. These glass slides were pretreated by gentle scrubbing with ALCONOX cleanser from VWR International, West Chester, Pennsylvania, and subsequently washed thoroughly with deionized water before use.

### RESISTANCE TO CARPET SOIL

### Method for Transmission, Haze and Gloss Measurement

Total transmission and haze measurements were conducted using a HAZE-GUARD PLUS haze meter purchased from BYK-Gardner USA, Columbia, Maryland. Gloss measurement was conducted on MICRO-TRI-GLOSS meter purchased from BYK-Gardner USA, Columbia, Maryland. The values reported are the average of three individual data points.

### Test Method for Measuring Soil-Resistance (Carpet Soil)

To measure the soil-resistance to carpet soil of the samples prepared according to the Examples and Comparative Examples described below, a carpet soil mixture was prepared. The carpet soil mixture was prepared by mixing beads (1600 g) and carpet soil mixture (80 g) at 20:1 weight (wt.) ratio using a paint shaker for 5 minutes in a gallon sized can. The carpet soil contained 38.4 weight percent peat moss blend, 17 weight percent gray Portland cement, 17 weight percent Dixie clay, 17 weight percent filter gel, 1.8 weight percent carbon black, and 8.8 weight percent mineral oil. Mixed using a gallon can and using a paint shaker for about 5 minutes.

Approximately 200 gram (g) portions of soil mixtures were placed into small cans, and samples prepared from Examples and Comparative Examples were placed (one sample per can) into cans so that the samples were totally covered. The immersed samples were shaken for 1 minute using a lab shake after which they were removed, and tapped on a hard surface about three times to remove the loosely adhered dirt. The total transmission, gloss and haze of each sample was measured before and after testing by using the methods described above.

### COMPARATIVE EXAMPLE A1-A3

Comparative Examples A1-A3 were, respectively, PET film, PMMA film, and glass slide substrates without further coatings or treatments. Comparative Examples A1-A3 were tested alongside and in the same manner as the other Examples and Comparative Example samples described below. Results of testing are reported in Tables 1-3.

### COMPARATIVE EXAMPLES B1-B3

Comparative Examples B1-B3 were prepared by coating PET film, PMMA film, and glass slide substrates with a coating composition prepared by mixing NALCO 1115 and NALCO 1050 silica sols at a 3:7 wt. ratio, followed by diluting to 10 weight percent solids using deionized water, and adjusting the pH of the diluted mixture to about 2-3 by acidifying with concentrated HNO₃. The acidified silica sol mixture was coated on the desired substrate using a # 6 wire-wound coating rod (from R D Specialties, Webster New York, nominal wet coating thickness = 14 microns). The resulting coated samples were dried at room temperature, and then further cured at 120 °C for 10 minutes. Comparative Examples B1-B3 were tested alongside and in the same manner as the other Examples and Comparative Examples. Results of testing are reported in Tables 1-3.

### COMPARATIVE EXAMPLE C1-C3

Comparative Examples C1-C3 was prepared by coating PET film, PMMA film, and glass slide substrates with a coating composition prepared by mixing NALCO 1115 and NALCO DVSZN004 silica sols at a 1:2 wt. ratio, followed by diluting to 10 weight percent solids using deionized water and adjusting the pH of the diluted mixture to about 2-3 by acidifying with concentrated HNO₃. The acidified silica sol mixture was coated on the desired substrate using a Mayer bar #6. The resulting coated samples were dried at room temperatures and then further cured at 120 °C for 10 minutes. Comparative Examples C1-C3 were tested alongside and in the same manner as the other Examples and Comparative Examples. Results are reported in Tables 1-3.

### COMPARATIVE EXAMPLE D1-D3

Comparative Examples D1-D3 were prepared by coating PET film, PMMA film, and glass slide substrates with a coating composition prepared by mixing NALCO 1115 and NALCO 2329 silica sols at a 1:2 wt. ratio, followed by diluting to 10 weight percent solids using deionized water and adjusting the pH of the diluted mixture to about 2-3 by acidifying with concentrated HNO₃. The acidified silica sol mixture was coated on the desired substrate using a #6 wire-wound coating rod. The resulting coated samples were dried at room temperatures and then further cured at 120 °C for 10 minutes. Comparative Examples D1-D3 were tested alongside and in the same manner as the other Examples and Comparative Examples. Results of testing are reported in Tables 1-3.

### EXAMPLES 1-5

Examples 1A-1C, 2A-2C, 3A-3C, 4A-4C, 5A-5C were prepared in the same manner as Comparative Example B 1-B3, respectively, except that before the PET film, PMMA film, and glass slide substrates were coated, various amounts of an aqueous solution of metal compound(s) was added to the acidified silica sol mixture. The nature and the amount of metal ion added for each Example is reported in Tables 1-3. The source of Cu ions was a 10 weight percent solution of (Cu(NO₃)₂·3H₂O; the source of Pt ions was a 10 weight percent solution of H₂PtCl₆·6H₂O, the source of Zn ions was a 10 wt% solution of Zn(NO₃)₂·6H₂O, the source of Fe ions was a 5 weight percent solution of FeCl₃·6H₂O, and the source of Sn ions was a 3.38 weight percent solution of SnCl₄·5H₂O. Examples 1A-5C samples were tested alongside and in the same manner as the other Examples and Comparative Examples. Results of testing are reported in Tables 1-3.

### EXAMPLES 6A-10C

Examples 6A-6C, 7A-7C, 8A-8C, 9A-9C, and 10A-10C were prepared in the same manner as Comparative Examples C1-C3, respectively, except that before the PET film, PMMA film, and glass slide substrates were coated, various amounts of an aqueous metal ion solution was added to the acidified silica sol mixture. The nature and the amount of metal ion added for each Example is reported in Tables 1-3. The sources of Cu, Pt, Zn, Fe, and Sn ions were the same as those in Examples 1A-5A, above. The Examples 6-10 samples were tested alongside and in the same manner as the other Examples and Comparative Examples. Results of testing are reported in Tables 1-3. None of Examples 6A-10C showed migration of the metal compounds.

### EXAMPLE 11-13

Examples 11A-11C, 12A-12C, and 13A-13C were prepared in the same manner as Comparative Examples D1-D3, respectively, except that before the PET film, PMMA film, and glass slide substrates were coated, various amounts of an aqueous metal ion solution was added to the acidified silica sol mixture. The nature and the amount of metal ion added for each Example is reported in Tables 1-3. The sources of Cu, Pt, Zn, Fe, and Sn ions were same as those in Examples 1-5, above. The Examples 11-13 samples were tested alongside and in the same manner as the other Examples and Comparative Example samples described below and the data were presented in Tables 1-3 below. None of the samples tested showed the migration of the metal compounds.

Table 1 reports coating compositions and resistance to carpet soil of Examples 1A-13A and Comparative Examples A1-D1 (PET substrate).

Table 2 reports coating compositions and resistance to carpet soil of Examples 1B-13B and Comparative Examples A2-D2 (PMMA substrate).

Table 3 reports coating compositions and resistance to carpet soil of Examples 1C-13C and Comparative Examples A3-D3 (glass substrate).

**TABLE 1**

| COATING COMPOSITION EXAMPLE | ADDED METAL COMPOUND | AMOUNT OF ADDED METAL COMPOUND (weight percent based on total metal compound + silica) | 60-DEGREE GLOSS, gloss units | | GLOSS RETAINED, % | TRANSMISSION DECREASE, % | HAZE INCREASE, % |
|---|---|---|---|---|---|---|---|
| | | | Before | After | | | |
| COMP. EX. A1 | none | 0 | 180.23 | 4.12 | 2.29 | 66.3 | 59.3 |
| COMP. EX. B1 | none | 0 | 144.8 | 27.7 | 19.1 | 7.7 | 30.1 |
| 1A | Cu(NO₃)₂·3H₂O | 20 | 150.8 | 149.0 | 98.9 | 2.2 | 0.7 |
| 2A | H₂PtCl₆·6H₂O | 20 | 149.9 | 142.9 | 95.3 | 1.5 | 2.2 |
| 3A | Zn(NO₃)₂·6H₂O | 20 | 163.8 | 161.8 | 98.8 | 0.6 | 1.1 |
| 4A | FeCl₃·6H₂O | 10 | 169.7 | 166.7 | 98.3 | 4.1 | 1.1 |
| 5A | SnCl₄·5H₂O | 7 | 166.6 | 164.3 | 98.6 | 0.2 | 0.4 |
| COMP. EX. C1 | none | 0 | 170.3 | 49.4 | 29.0 | 7.3 | 59.3 |
| 6A | Cu(NO₃)₂·3H₂O | 20 | 157.4 | 154.3 | 98.0 | 0.5 | 0.3 |
| 7A | H₂PtCl₆·6H₂O | 20 | 153.3 | 140.2 | 91.4 | 0.8 | 3.8 |
| 8A | Zn(NO₃)₂·6H₂O | 20 | 147.9 | 138.6 | 93.7 | 2.4 | 1.2 |
| 9A | FeCl₃·6H₂O | 10 | 159.2 | 157.5 | 98.9 | 0.6 | 0.3 |
| 10A | SnCl₄·5H₂O | 7 | 168.9 | 155.8 | 92.3 | 0.1 | 2.3 |
| COMP. EX. D1 | none | 0 | 167.7 | 31.6 | 18.8 | 7.9 | 27.0 |
| 11A | Cu(NO₃)₂·3H₂O | 20 | 145.8 | 115.1 | 78.9 | 1.9 | 2.9 |
| 12A | Zn(NO₃)₂·6H₂O | 20 | 168.7 | 103.8 | 61.5 | 1.6 | 7.8 |
| 13A | SnCl₄·5H₂O | 7 | 168.5 | 137.7 | 81.7 | 0.0 | 4.3 |

**TABLE 2**

| COATING COMPOSITION EXAMPLE | ADDED METAL COMPOUND | AMOUNT OF ADDED METAL COMPOUND, (weight percent based on total metal compound + silica) | 60-DEGREE GLOSS, gloss units | | GLOSS RETAINED, % | TRANSMISSION DECREASE, % | HAZE INCREASE, % |
|---|---|---|---|---|---|---|---|
| | | | Before | After | | | |
| COMP. EX. A2 | none | 0 | 86.5 | 0.6 | 0.7 | 93.6 | 40.1 |
| COMP. EX. B2 | none | 0 | 73.7 | 48.4 | 65.7 | 3.2 | 5.0 |
| 1B | Cu(NO₃)₂·3H₂O | 20 | 60.8 | 50.1 | 82.5 | 1.6 | 0.4 |
| 2B | H₂PtCl₆·6H₂O | 20 | 82.6 | 66.1 | 80.0 | 2.1 | 2.4 |
| 3B | Zn(NO₃)₂·6H₂O | 20 | 65.0 | 42.3 | 65.1 | 2.3 | 3.7 |
| 4B | FeCl₃·6H₂O | 10 | 85.8 | 75.8 | 88.4 | 1.4 | 2.2 |
| 5B | SnCl₄·5H₂O | 7 | 72.1 | 66.1 | 91.7 | 1.9 | 2.5 |
| COMP. EX. C2 | none | 0 | 90.9 | 1.5 | 1.7 | 13.2 | 18.6 |
| 6B | Cu(NO₃)₂·3H₂O | 20 | 90.1 | 38.3 | 42.5 | 3.0 | 0.7 |
| 7B | H₂PtCl₆·6H₂O | 20 | 89.7 | 11.1 | 12.4 | 6.0 | 14.9 |
| 8B | Zn(NO₃)₂·6H₂O | 20 | 89.4 | 11.2 | 12.5 | 4.9 | 5.7 |
| 9B | FeCl₃·6H₂O | 10 | 95.5 | 45.0 | 47.1 | 2.3 | 3.2 |
| 10B | SnCl₄·5H₂O | 7 | 91.0 | 65.4 | 71.8 | 3.5 | 2.7 |
| COMP. EX. D2 | none | 0.0 | 90.8 | 1.0 | 1.1 | 11.1 | 15.3 |
| 11B | Cu(NO₃)₂·3H₂O | 20 | 89.0 | 40.3 | 45.3 | 2.6 | 1.5 |
| 12B | Zn(NO₃)₂·6H₂O | 20 | 87.2 | 4.5 | 5.1 | 7.5 | 9.87 |
| 13B | SnCl₄·5H₂O | 7 | 82.6 | 38.6 | 46.8 | 1.6 | 2.1 |

**TABLE 3**

| COATING COMPOSITION EXAMPLE | ADDED METAL COMPOUND | AMOUNT OF ADDED METAL COMPOUND, (weight percent based on total metal compound + silica) | 60-DEGREE GLOSS, gloss units | | GLOSS RETAINED, % | TRANSMISSION DECREASE, % | HAZE INCREASE, % |
|---|---|---|---|---|---|---|---|
| | | | Before | After | | | |
| COMP. EX. A3 | none | 0 | 149.6 | 19.8 | 13.2 | 22.5 | 55.4 |
| COMP. EX. B3 | none | 0 | 141.8 | 21.9 | 15.4 | 8.5 | 27.2 |
| 1C | Cu(NO₃)₂·3H₂O | 20 | 137.1 | 118.4 | 86.4 | 0.9 | 4.1 |
| 2C | H₂PtCl₆·6H₂O | 20 | 138.5 | 69.7 | 50.0 | 5.2 | 12.2 |
| 3C | Zn(NO₃)₂·6H₂O | 20 | 148.1 | 110.0 | 74.3 | 1.6 | 6.2 |
| 4C | FeCl₃·6H₂O | 10 | 146.4 | 126.4 | 86.4 | 0.8 | 3.2 |
| 5C | SnCl₄·5H₂O | 7 | 141.5 | 125.0 | 88.3 | 0.2 | 1.1 |
| COMP. EX. C3 | none | 0 | 143.7 | 25.0 | 17.4 | 7.8 | 26.8 |
| 6C | Cu(NO₃)₂·3H₂O | 20 | 133.3 | 112.5 | 84.4 | 1.4 | 7.1 |
| 7C | H₂PtCl₆·6H₂O | 20 | 138.8 | 57.3 | 41.2 | 6.5 | 15.0 |
| 8C | Zn(NO₃)₂·6H₂O | 20 | 142.3 | 101.3 | 71.2 | 2.2 | 8.8 |
| 9C | FeCl₃·6H₂O | 10 | 144.9 | 104.6 | 72.2 | 1.6 | 6.0 |
| 10C | SnCl₄·5H₂O | 7 | 143.8 | 131.9 | 91.7 | 1.1 | 3.4 |
| COMP. EX. D3 | none | 0 | 139.3 | 22.2 | 16.0 | 9.2 | 31.2 |
| 11C | Cu(NO₃)₂·3H₂O | 20 | 145.2 | 115.5 | 79.6 | 0.5 | 2.3 |
| 12C | Zn(NO₃)₂·6H₂O | 20 | 136.6 | 73.8 | 54.0 | 3.0 | 13.3 |
| 13C | SnCl₄·5H₂O | 7 | 140.9 | 95.9 | 68.0 | 2.1 | 7.3 |

### EXAMPLES 14-18 and COMPARATIVE EXAMPLE E

### EASY CLEANING TEST

This test was carried out by immersing the coated substrate sample into the Carpet Soil used in the Test Method for Measuring Soil-Resistance (Carpet Soil) and shaking it 30 seconds. The sample was removed from the soil container and rinsed with tap water for 1 minute at a speed of 750 milliliters per minute (mL/min). Upon drying transmission and haze of the samples was measured.

In Table 4, %ΔT refers to percent change in the transmission of the glass test panel coated with silica (and optionally metal ion) after shaking with Carpet Soil relative to the transmission of an uncoated glass test panel after shaking with Carpet Soil (a positive number indicates better transmission observed for the coated sample), and %ΔH refers to percent change in the haze of the glass test panel with silica (and optionally metal ion) after shaking with Carpet Soil relative to the haze of an uncoated glass test panel after shaking with Carpet Soil(a positive number indicates better transmission observed for the coated sample).

**TABLE 4**

| EXAMPLE | COATING COMPOSITION (weight ratio of components) | %ΔT | %ΔH |
|---|---|---|---|
| Comp. Ex. E | LEVASIL 500/15 | 0.7 | -24 |
| 14 | LEVASIL 500/15, CaCl₂·6H₂O (95/5) | 1.3 | -72 |
| 15 | LEVASIL 500/15, MgCl₂·6H₂O (95/5) | 0.6 | -36 |
| 16 | LEVASIL 500/15, ZnCl₂ (95/5) | 2.2 | -80 |
| 17 | LEVASIL 500/15, FeCl₃·6H₂O (95/5) | 3.4 | -97 |
| 18 | LEVASIL 500/15, ZrOCl₂·8H₂O (95/5) | 0.2 | -8 |

### RESISTANCE TO LIME SCALE BUILD UP

### Static Water Contact Angle (SWCA) Measurement

Static water contact angle measurements were performed on dried (coated) samples using deionized water, obtained from Millipore Corporation. The contact angle analyzer used was a VCA Optima video contact angle analyzer from AST Products Inc., Billerica, Massachusetts. The static contact angle was measured on a sessile drop (1 µL), 30 sec after deposition. The values reported are the average of at least 4 separate measurements.

### Transparency Measurement

The samples were tested for light transmission (T), haze (H) and clarity (C) using a BYK Gardner Haze-Gard Plus instrument (BYK Gardner). The transmission, haze and clarity levels were collected according to ASTM-D 1003-00 entitled 'Standard Test Method for Haze and Luminous Transmittance for Transparent Plastics'. The instrument was referenced against air during the measurements.

Light transmission (T) measurements are provided as a percentage of transmission. Haze (H) is the scattering of light by a specimen responsible for the reduction in contrast of objects viewed through it. Haze is presented as the percentage of transmitted light that is scattered so that its direction deviates more than a specified angle from the direction of the incident beam. The specified angle used was 2.5 degrees.

Clarity (C) is presented as the percentage of transmitted light that is scattered so that its direction deviates less than 2.5 degrees.

The values recorded represent the percentage of relative change of transmission, haze and clarity in a comparison between stained coated versus stained untreated test panel.

### Test panels

Soda-lime float glass test panels were used. The tests were done on the side (air side) opposite to the tin side of the glass.

### Treatment of Test Panels Method

Silica nanoparticle dispersions (size of the nanoparticles as indicated in the following examples) were diluted with deionized water and acidified with nitric acid to a pH of 2-3. Aqueous solutions of the ionic additives were prepared by dissolving solid additives in deionized water at a concentration of 10 percent by weight based on the total weight of the aqueous solution. The aqueous solution of the additive was then added to the silica nanoparticle dispersion in amounts as listed in the examples. Unless otherwise stated, all coating dispersions contained 5 wt% solids.

The test panels were divided into two sections, wherein one section remained untreated and the other section was treated with a composition according to the invention or with a comparative treating composition. This method provides a control on the same panel, since the spraying procedure for the generation of hard water stains as outlined below may give differences in the amount of stain produced from panel to panel.

Treatment of part of the panels was done by putting a small amount (0.5-1 mL) of dispersion onto the test panel, by means of a 1 mL pipette. The dispersion was allowed to spread and then the panel was wiped dry with the help of a KimWipe tissue (available from Kimberly-Clark, Neenah, Wisconsin). The panel was then left at room temperature for at least 5 min. When properly applied, a treatment made with a composition was not visible by eye.

### Generation of Hard Water Stains

Hard water stains were generated by spraying of the below mentioned solutions on the test panels, held in vertical position.

Solution A: Solution A contained 1 weight percent of CaCl₂·6H₂O, 0.5 weight percent of MgCl₂·6H₂O, 12 weight percent of ethanol and 86.5 weight percent of deionized water.

Solution B: Solution B contained 1.5 weight percent of NaHCO₃ and 98.5 weight percent of deionized water

Solution A was first sprayed on the test panels 3 times, followed by spraying on solution B. Then the test panels were allowed to dry at room temperature for 5 min and the procedure was repeated twice. This was followed by rinsing the test samples under a tap with deionized water for 60 sec at a speed of 600mL/min. After rinsing, the test samples were dried at RT during 5 min.

### EXAMPLES 19-23 AND COMPARATIVE EXAMPLE F

Examples 19-23 were carried out by treating glass test panels according to the *Treatment of Test Panels Method (above) using* a 5 weight percent aqueous dispersion of acidified NALCO 1115 containing different amounts of ZrOCl₂·8H₂O, as given in Table 5. Comparative Example F was made with a glass test panel that was treated with a 5 wt% aqueous dispersion of acidified NALCO 1115, without additives. The test panels were evaluated for the hydrophilicity of the coating by measuring static water contact angles (SWCA). Hard water stains were generated according to the general procedure outlined above. The test panels were evaluated for their transparency. Test results are reported in Table 5.

In Tables 5-8, %ΔT refers to percent change in the transmission of the glass test panel with silica (and optionally metal ion) after hard water staining relative to the transmission of an uncoated glass test panel after hard water staining, %ΔH refers to percent change in the haze of the glass test panel with silica (and optionally metal ion) after hard water staining relative to the haze of an uncoated glass test panel after hard water staining, and %ΔC refers to percent change in the clarity of the glass test panel with silica (and optionally metal ion) after hard water staining relative to the clarity of an uncoated glass test panel after hard water staining,

**TABLE 5**

| EXAMPLE | NALCO 1115/ ZrOCl₂·8H₂O, (weight ratio of components) | SWCA, degrees | %ΔT | %ΔH | %ΔC |
|---|---|---|---|---|---|
| 19 | 98/2 | <5 | 0.6 | -48 | 0 |
| 20 | 95/5 | <5 | 1 | -66 | 0.3 |
| 21 | 90/10 | <5 | 0.7 | -67 | 0.3 |
| 22 | 80/20 | NM | 0.8 | -68 | 0.2 |
| 23 | 50/50 | NM | 0.4 | -87 | 0.1 |
| Comp. Ex. F | 100/0 | <5 | 0.2 | -19 | 0.1 |

### EXAMPLES 24 AND 25

Examples 23 and 24 were made in the same way as Example 13, except using blends of silica nanoparticles having different average particle sizes, as indicated in Table 6. The silica nanoparticles were mixed with ZrOCl₂·8H₂O in a ratio 95/5. The coating compositions had a total solids content of 5% by weight.

**TABLE 6**

| EXAMPLE | COATING COMPOSITION (weight ratio of components) | %ΔT | %ΔH | %ΔC |
|---|---|---|---|---|
| 24 | NALCO 1115/ NALCO 1050/ ZrOCl₂·8H₂O (85.5/9.5/5) | 0.4 | -34 | 0.2 |
| 25 | NALCO 1115/NALCO TX11561/ ZrOCl₂·8H₂O (85.5/9.5/5) | 1.1 | -53 | 0.2 |

### EXAMPLES 26-30

Glass test panels were treated according to the *Treatment of Test Panels Method* using a 5 weight percent aqueous dispersion of acidified NALCO 1115 containing different amounts of TiOSO₄·2H₂O as given in Table 7. The test panels were evaluated for the hydrophilicity of the coating by measuring static water contact angles (SWCA). Hard water stains were generated according to the general procedure outlined above. The test panels were evaluated for their transparency. All test results are reported in Table 7 (below).

**TABLE 7**

| EXAMPLE | NALCO 1115/ TiOSO₄·2H₂O, weight of components | SWCA, degrees | %ΔT | %ΔH | %ΔC |
|---|---|---|---|---|---|
| 26 | 80/20 | <5 | 0.5 | -61 | 0.2 |
| 27 | 50/50 | <5 | 0.7 | -87 | 0.6 |

**TABLE 8**

| EXAMPLE | COATING COMPOSITION (weight ratio of components) | %ΔT | %ΔH |
|---|---|---|---|
| 28 | LEVASIL 500/15, CaCl₂·6H₂O (95/5) | 1.6 | -63 |
| 29 | LEVASIL 500/15, MgCl₂·6H₂O(95/5) | -0.1 | -21 |
| 30 | LEVASIL 500/15, FeCl₃·6H₂O (95/5) | 0.4 | -5 |

### TEST METHOD FOR X-RAY SCATTERING ANALYSIS

Reflection geometry data were collected in the form of a survey scan by use of a PANalytical Empyrean diffractometer, copper K_{α} radiation, and PIXcel detector registry of the scattered radiation. The diffractometer was fitted with variable incident beam slits and diffracted beam slits. The survey scan was conducted in a coupled continuous mode from 5 to 80 degrees (2θ) using a 0.04 degree step size and 1200 second dwell time. X-ray generator settings of 40 kV and 40 mA were employed.

### EXAMPLES 31-35 AND COMPARATIVE EXAMPLE G

Examples 31-35 were prepared by coating metal-doped silica dispersions on soda-lime glass substrates (obtained from Brin Northwestern Glass Company, Minneapolis, Minnesota) using a #6 wire-wound coating rod (nominal wet coating thickness = 14 microns). The metal-doped colloidal silica dispersions were prepared by diluting NALCO 1115 silica sol to 10 weight percent solids with deionized water, acidifying the diluted silica sol with concentrated HNO₃ to a pH of about 2-3, and then adding a desired amount of aqueous metal compound solutions (10 weight percent Cu(NO₃)₂·3H₂O, FeCl₃·6H₂O, SnCl₄·5H₂O, TiOSO₄·2H₂O, or Zn(NO₃)₂·6H₂O). The type and amount of metal cations added to the coating compositions for each Examples 31-35 are reported in Table 9. The coated samples were then dried at room temperature, and then further cured at 120°C for 10 min. The final coated samples were optically clear and transparent. The powders for analysis were collected by scraping the coating off from glass substrates. The samples thus prepared were analyzed according to the *TEST METHOD FOR X-RAY SCATTERING ANALYSIS* described above and the results are reported below in Table 9.

Comparative Example G was prepared by coating silica dispersions on soda-lime glass substrates using a #6 wire-wound coating rod (nominal wet coating thickness = 14 microns). The silica dispersions were prepared by diluting NALCO 1115 silica sol to 10 weight percent solids with deionized water, acidifying the diluted silica sol with concentrated HNO₃ to a pH of about 2-3. The coated samples were then dried at room temp and then further cured at 120 °C for 10 min. The final coated samples were optically clear and transparent. The powders were collected by scraping the coating off from glass substrates, and then mixed with a desired amount of solid TiOSO₄·2H₂O powder to have the same ratio of silica/metal compound as in EXAMPLE 35.

**TABLE 9**

| EXAMPLE | ADDED METAL COMPOUND | AMOUNT OF ADDED METAL COMPOUND WEIGHT % OF SOLIDS | PHASE PRESENT |
|---|---|---|---|
| 31 | Cu(NO₃)₂·3H₂O | 5 | Amorphous |
| 32 | FeCl₃·6H₂O | 5 | Amorphous |
| 33 | SnCl₄·5H₂O | 5 | Amorphous (major) + cassiterite (SnO₂) trace |
| 34 | Zn(NO₃)₂·6H₂O) | 5 | Amorphous |
| 35 | TiOSO₄·2H₂O | 5 | Amorphous |
| Comp. Ex. G | TiOSO₄·2H₂O | 5 | Amorphous (major) + Nitratine (NaNO_{3,} major) + Titanium Oxide Sulfate dehydrate (TiOSO₄·2H₂O, major) |

Other modifications and variations to the present disclosure may be practiced by those of ordinary skill in the art, without departing from the spirit and scope of the present disclosure, which is more particularly set forth in the appended claims. It is understood that aspects of the various embodiments may be interchanged in whole or part or combined with other aspects of the various embodiments. All cited references, patents, or patent applications in the above application for letters patent are herein incorporated by reference in their entirety in a consistent manner. In the event of inconsistencies or contradictions between portions of the incorporated references and this application, the information in the preceding description shall control. The preceding description, given in order to enable one of ordinary skill in the art to practice the claimed disclosure, is not to be construed as limiting the scope of the disclosure, which is defined by the claims and all equivalents thereto.

## Claims

1. A method of making a coatable composition, the method comprising sequentially:
a) providing an initial composition comprising silica nanoparticles dispersed in an aqueous liquid medium, wherein the silica nanoparticles have a particle size distribution with an average particle size of less than or equal to 100 nanometers, and wherein the silica sol has a pH greater than 6;
b) acidifying the initial composition to a pH of less than or equal to 4 using inorganic acid to provide a acidified composition; and
c) dissolving at least one metal compound in the acidified composition to provide a coatable composition, wherein the at least one metal compound comprises at least one metal in any of groups 2 through 15 of the Periodic Table of the Elements.

2. The method of claim 1, wherein said at least one metal compound is selected from the group consisting of tin compounds, copper compounds, iron compounds, platinum compounds, calcium compounds, magnesium compounds, zinc compounds, zirconium compounds, titanium compounds, antimony compounds, and combinations thereof.

3. The method of claim 1, wherein said at least one metal compound comprises at least one metal cation, and wherein the metal cation comprises from 0.2 to 20 mole percent of the total combined moles of silicon and the at least one metal cation.

4. The method of claim 1, wherein the coatable composition is essentially free of organic non-volatile compounds.

5. A method of making a soil-resistant article, the method comprising the sequential steps:
(a) providing a composition according to claim 1;
(b) contacting the coatable composition with a surface of a substrate; and
(c) at least partially drying the coatable composition to provide a soil-resistant layer.

6. The method of claim 5, wherein said at least one metal compound is selected from the group consisting of tin compounds, copper compounds, iron compounds, platinum compounds, calcium compounds, magnesium compounds, zinc compounds, zirconium compounds, titanium compounds, antimony compounds, and combinations thereof.

7. The method of claim 5, wherein the silica nanoparticles have an average particle size of less than or equal to 45 nanometers.

8. The method of claim 5, wherein the inorganic acid has a pKₐ of less than or equal to zero.

9. The method of claim 5, wherein the coatable composition is essentially free of organic non-volatile compounds.

10. A soil-resistant composition comprising an amorphous silica matrix containing metal cations, wherein the silica matrix comprises interconnected silica nanoparticles having a particle size distribution with an average particle size of less than or equal to 100 nanometers, wherein the metal cations are selected from the group consisting of iron cations, calcium cations, magnesium cations, zirconium cations, and combinations thereof, wherein a majority of the metal cations are individually disposed in the silica matrix, and wherein the metal cations comprise from 0.2 to 20 mole percent of the total combined moles of silicon and the metal cations.

11. The soil-resistant composition of claim 10, wherein the silica nanoparticles have an average particle size of less than or equal to 45 nanometers.

12. The soil-resistant composition of claim 10, wherein the soil-resistant composition is essentially free of organic non-volatile compounds.

13. A soil-resistant article comprising a layer of the amorphous soil-resistant composition of claim 10 disposed on a surface of a substrate.

14. The soil-resistant article of claim 13, wherein the coatable composition is essentially free of organic non-volatile compounds.

## Patentansprüche

1. Verfahren zur Herstellung einer Zusammensetzung zum Beschichten, worin das Verfahren nacheinander folgendes umfasst:
a) Bereitstellen einer Ausgangszusammensetzung umfassend Siliciumdioxid-Nanoteilchen, die in einem wässrigen flüssigen Medium dispergiert sind, worin die Siliciumdioxid-Nanoteilchen eine Teilchengrößenverteilung mit einer durchschnittlichen Teilchengröße von weniger als oder gleich 100 nm aufweisen, und worin das Kieselsol einen pH von größer als 6 aufweist;
b) Ansäuern der Ausgangszusammensetzung auf einen pH von weniger als oder gleich 4 unter Verwendung einer anorganischen Säure, um eine angesäuerte Zusammensetzung bereitzustellen; und
c) Auflösen von mindestens einer Metallverbindung in der angesäuerten Zusammensetzung, um eine Zusammensetzung zum Beschichten bereitzustellen, worin die mindestens eine Metallverbindung mindestens ein Metall in einer der Gruppen 2 bis 15 des Periodensystems der Elemente umfasst.

2. Verfahren nach Anspruch 1, worin die mindestens eine Metallverbindung ausgewählt ist aus der Gruppe bestehend aus Zinn-Verbindungen, Kupfer-Verbindungen, EisenVerbindungen, Platin-Verbindungen, Calcium-Verbindungen, Magnesium-Verbindungen, Zink-Verbindungen, Zirconium-Verbindungen, Titan-Verbindungen, Antimon-Verbindungen, und Kombinationen davon.

3. Verfahren nach Anspruch 1, worin die mindestens eine Metallverbindung mindestens ein Metallkation umfasst, und worin das Metallkation von 0,2 bis 20 Mol-% der gesamten kombinierten Mole von Gesamtsilicium und dem mindestens einen Metallkation umfasst.

4. Verfahren nach Anspruch 1, wobei die beschichtbare Zusammensetzung im Wesentlichen frei von organischen nichtflüchtigen Verbindungen ist.

5. Verfahren zur Herstellung eines schmutzabweisenden Gegenstands, worin das Verfahren die aufeinanderfolgenden Schritte umfasst:
(a) Bereitstellen einer Zusammensetzung nach Anspruch 1;
(b) Kontaktieren der Zusammensetzung zum Beschichten mit einer Oberfläche eines Substrats; und
(c) mindestens teilweises Trocknen der Zusammensetzung zum Beschichten, um eine schmutzabweisenden Schicht bereitzustellen.

6. Verfahren nach Anspruch 5, worin die mindestens eine Metallverbindung ausgewählt ist aus der Gruppe bestehend aus Zinn-Verbindungen, Kupfer-Verbindungen, EisenVerbindungen, Platin-Verbindungen, Calcium-Verbindungen, Magnesium-Verbindungen, Zink-Verbindungen, Zirconium-Verbindungen, Titan-Verbindungen, Antimon-Verbindungen, und Kombinationen davon.

7. Verfahren nach Anspruch 5, worin die Siliciumdioxid-Nanoteilchen eine durchschnittliche Teilchengröße von weniger als oder gleich 45 nm aufweisen.

8. Verfahren nach Anspruch 5, worin die anorganische Säure einen pKₐ von weniger als oder gleich Null aufweist.

9. Verfahren nach Anspruch 5, wobei die beschichtbare Zusammensetzung im Wesentlichen frei von organischen nichtflüchtigen Verbindungen ist.

10. Schmutzabweisende Zusammensetzung umfassend eine amorphe Siliciumdioxid-Matrix enthaltend Metallkationen, worin die Siliciumdioxid-Matrix miteinander verknüpfte Siliciumdioxid-Nanoteilchen mit einer Teilchengrößenverteilung mit einer durchschnittlichen Teilchengröße von weniger als oder gleich 100 nm umfasst, worin die Metallkationen ausgewählt sind aus der Gruppe bestehend aus Eisenkationen, Calciumkationen, Magnesiumkationen, Zirconiumkationen und Kombinationen davon, worin eine Mehrheit der Metallkationen einzeln in der Siliciumdioxid-Matrix angeordnet sind und worin die Metallkationen von 0,2 bis 20 Mol-% der gesamten kombinierten Mole von Silicium und den Metallkationen umfassen.

11. Schmutzabweisende Zusammensetzung nach Anspruch 10, worin die Siliciumdioxid-Nanoteilchen eine durchschnittliche Teilchengröße von weniger als oder gleich 45 nm aufweisen.

12. Schmutzabweisende Zusammensetzung nach Anspruch 10, worin die schmutzabweisende Zusammensetzung im Wesentlichen frei ist von organischen nichtflüchtigen Verbindungen.

13. Schmutzabweisender Gegenstand umfassend eine Schicht der amorphen schmutzabweisenden Zusammensetzung nach Anspruch 10, die auf einer Oberfläche eines Substrats angeordnet ist.

14. Schmutzabweisender Gegenstand nach Anspruch 13, worin die Zusammensetzung zum Beschichten im Wesentlichen frei ist von organischen nichtflüchtigen Verbindungen.

## Revendications

1. Procédé de fabrication d'une composition pouvant être revêtue, le procédé comprenant, séquentiellement :
a) la fourniture d'une composition initiale comprenant des nanoparticules de silice dispersées dans un milieu liquide aqueux, dans lequel les nanoparticules de silice ont une distribution granulométrique avec une taille moyenne de particules inférieure ou égale à 100 nanomètres, et dans lequel le sol de silice a un pH supérieur à 6 ;
b) l'acidification de la composition initiale à un pH inférieur ou égal à 4 en utilisant un acide inorganique pour fournir une composition acidifiée ; et
c) la dissolution d'au moins un composé métallique dans la composition acidifiée pour fournir une composition pouvant être revêtue, dans lequel ledit au moins un composé métallique comprend au moins un métal de l'un quelconque des groupes 2 à 15 du tableau périodique des éléments.

2. Procédé selon la revendication 1, dans lequel ledit au moins un composé métallique est choisi dans le groupe constitué de composés d'étain, composés de cuivre, composés de fer, composés de platine, composés de calcium, composés de magnésium, composés de zinc, composés de zirconium, composés de titane, composés d'antimoine, et des combinaisons de ceux-ci.

3. Procédé selon la revendication 1, dans lequel ledit au moins un composé métallique comprend au moins un cation métallique, et dans lequel le cation métallique constitue de 0,2 à 20 pour cent molaires du nombre total de moles combiné de silicium et de l'au moins un cation métallique.

4. Procédé selon la revendication 1, dans lequel la composition pouvant être revêtue est pratiquement exempte de composés organiques non volatils.

5. Procédé de fabrication d'un article résistant aux salissures, le procédé comprenant les étapes séquentielles de :
(a) fourniture d'une composition selon la revendication 1 ;
(b) mise en contact de la composition pouvant être revêtue avec une surface d'un substrat ; et
(c) séchage au moins partiel de la composition pouvant être revêtue pour fournir une couche résistant aux salissures.

6. Procédé selon la revendication 5, dans lequel ledit au moins un composé métallique est choisi dans le groupe constitué de composés d'étain, composés de cuivre, composés de fer, composés de platine, composés de calcium, composés de magnésium, composés de zinc, composés de zirconium, composés de titane, composés d'antimoine, et des combinaisons de ceux-ci.

7. Procédé selon la revendication 5, dans lequel les nanoparticules de silice ont une taille moyenne de particules inférieure ou égale à 45 nanomètres.

8. Procédé selon la revendication 5, dans lequel l'acide inorganique a un pKₐ inférieur ou égal à zéro.

9. Procédé selon la revendication 5, dans lequel la composition pouvant être revêtue est pratiquement exempte de composés organiques non volatils.

10. Composition résistant aux salissures comprenant une matrice de silice amorphe contenant des cations métalliques, dans laquelle la matrice de silice comprend des nanoparticules de silice interconnectées ayant une distribution granulométrique avec une taille moyenne de particules inférieure ou égale à 100 nanomètres, dans laquelle les cations métalliques sont choisis dans le groupe constitué de cations de fer, cations de calcium, cations de magnésium, cations de zirconium, et des combinaisons de ceux-ci, dans laquelle une majorité des cations métalliques est disposée individuellement dans la matrice de silice, et dans laquelle les cations métalliques constituent de 0,2 à 20 pour cent molaires du nombre total de moles combiné de silicium et de cations métalliques.

11. Composition résistant aux salissures selon la revendication 10, dans laquelle les nanoparticules de silice ont une taille moyenne de particules inférieure ou égale à 45 nanomètres.

12. Composition résistant aux salissures selon la revendication 10, dans laquelle la composition résistant aux salissures est pratiquement exempte de composés organiques non volatils.

13. Article résistant aux salissures comprenant une couche de la composition amorphe résistant aux salissures selon la revendication 10 disposée sur une surface d'un substrat.

14. Article résistant aux salissures selon la revendication 13, dans lequel la composition pouvant être revêtue est pratiquement exempte de composés organiques non volatils.
